# EUROPEAN PATENT APPLICATION

(11) **EP 1 876 305 A1**
(43) Date of publication of application: **09.01.2008**
(21) Application number: 06116807.6
(22) Date of filing: 07.07.2006
(51) Int. Cl.: E03C 1/05, F16K 11/076

(54) **Mixing faucet with switching from automatic to manual control**

(71) Applicant: Wang, Hsiang Hung, Changhua County (TW)
(72) Inventor: Wang, Hsiang Hung, Changhua County (TW)
(74) Representative: Dokter, Eric-Michael

(57) **Abstract**

An induction faucets assembly with a manual water discharge structure capable of mixing cold and hot water includes a faucet (30) which is coupled with a sensor (55), a water intake mixing dock (40) housed in the faucet (30), a switching means (70) and a solenoid valve (50). The water intake mixing dock (40) has two water intake ports (42) to connect to cold and hot water tubes (43), and a cold/hot regulation bolt (35) in the middle portion running through the two water intake ports (42). The switching means (70) has a switch valve (71) to couple with a valve sleeve (60). The valve sleeve (60) has a manual water intake port (62) and an automatic water intake port (61) on the bottom opposing a manual water intake dock (711) and an automatic water intake dock (711) of the switching means (70). The valve sleeve (60) further has an indented mixing chamber (63) on the bottom around the manual water intake port (62). The solenoid valve (50) has an automatic water discharge tube (51) connecting to an automatic water outlet (45) of the water intake mixing dock (40) and an automatic water intake tube (53) coupled with a check valve (52) to connect to an automatic water inlet (46) of the water intake mixing dock (40). Thereby switching of automatic water discharge or manual water discharge may be accomplished through the switching means (70). The cold/hot regulation bolt (35) also can regulate the mixing ratio of cold and hot water to adjust water temperature. While water discharge is done manually, removal and replacement of the solenoid valve (50) for repairs can be done without affecting water supply of the faucet (30).

## Description

### BACKGROUND OF THE INVENTION

### 1. Field of the Invention

The present invention relates to a faucet and particularly to an induction faucet that can be switched manually and automatically and regulate mixing of cold and hot water for water supply.

### 2. Description of the Prior Art

Taiwan utility patent No. 93218351 entitled "Manual water discharge control structure for induction faucets" includes a water supply valve to channel water respectively to a solenoid valve and a manual switch device to enable users to switch and control water supply as desired. In the event that the sensor or solenoid valve malfunctions, through a regulation and switch check valve water supply source can be switched manually to control water discharge. Disassembly is easier and repairs and maintenance are more convenient without affecting water supply of the faucet.

However, the induction faucet controlled manually to supply water can only regulate cold water, and cannot control mixing of cold and hot water. Such a product is limited to the market of warm, tropical or subtropical regions, but not the cold regions. There are still rooms for improvement.

### SUMMARY OF THE INVENTION

In view of the problems occurred to the conventional induction faucet mentioned above, the primary object of the invention is to provide a manual water discharge control structure for induction faucets capable of mixing cold and hot water that is adopted for use on an automatic induction faucet with dual purposes switch functions and can be controlled manually and also regulate mixing of cold and hot water for water supply.

Another object of the invention is to provide a manual water control structure for induction faucets capable of mixing cold and hot water that can be switched to manual control to discharge water in the event of malfunction occurred to automatic induction water discharge so that normal water supply can be maintained to facilitate repairs and maintenance of the induction sensor.

To achieve the foregoing objects, the faucet of the invention is coupled with a sensor. The faucet includes a water intake mixing dock to regulate mixing ratio of cold and hot water, a switching means, a solenoid valve to control automatic water supply through induction and a check valve. The water intake mixing dock has two water intake ports to couple with cold and hot water tubes, and an automatic water outlet and an automatic water inlet running through thereof. It also has a regulation bore in a middle portion run through transversely by a cold/hot regulation bolt to lead to the two water intake ports. The switching means includes a switch valve and a control knob. The switch valve is coupled with a valve sleeve which has a upward opening and an automatic water intake port and a manual water intake port on the bottom thereof opposing a manual water intake dock and an automatic water intake port of the switch valve. The valve sleeve further has an indented mixing chamber on the bottom around the manual water intake port to cover the two water intake ports and automatic water intake port of the water intake mixing dock. The valve sleeve has an annular water trough and two water outlets. The solenoid valve has an automatic water discharge tube connecting to the automatic water outlet of the water intake mixing dock, and an automatic water intake tube connecting to the automatic water inlet of the water intake mixing dock through the check valve which has a check bolt. The sensor is connected through a control line. The mixing chamber at the bottom of the valve sleeve may be located on a upper end of the water intake mixing dock, namely a T-shaped mixing chamber may be formed on a upper end of the water intake ports of the water intake mixing dock communicating with the upper end of the automatic water inlet. The bottom of the valve sleeve around the manual water intake port has an annular wedging groove to be wedged by a sealing ring to press the periphery of the mixing chamber of the water intake mixing dock to separate from the automatic water outlet that opposes the automatic water intake port. Thereby the water intake mixing dock is coupled with the cold and hot water tubes to channel cold and hot water into the mixing chamber for mixing.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is an exploded view of the invention.
FIG. 2 is a perspective view of the invention.
FIG. 3 is a sectional view of the invention.
FIG. 4 is a sectional view of an embodiment of the invention showing water discharge through manual control.
FIG. 5 is a schematic view of an embodiment of the invention showing water discharge through automatic induction.
FIG. 6 is a perspective view of a second embodiment of the invention.

### DESCRIPTION OF THE PREFERRED EMBODIMENTS

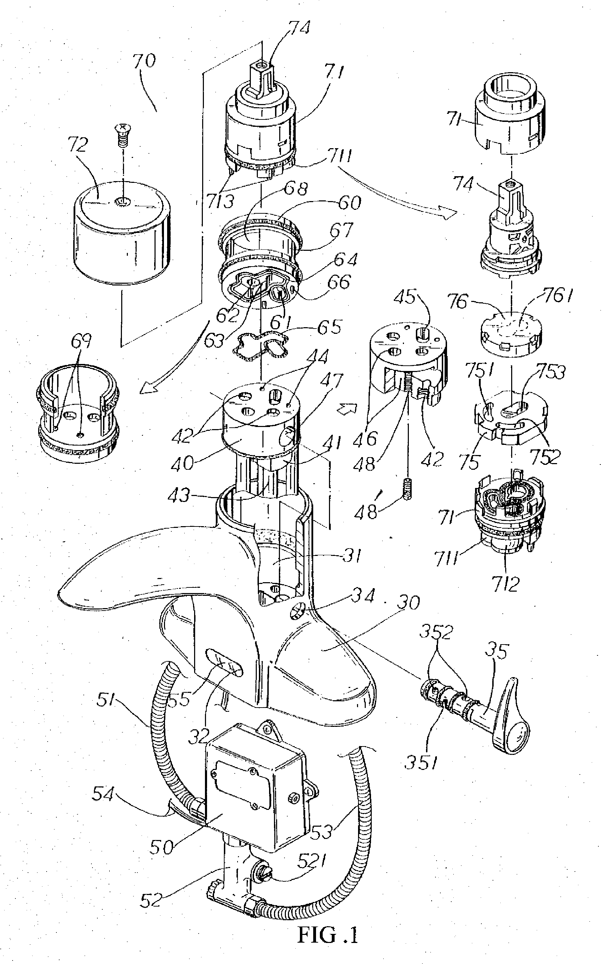

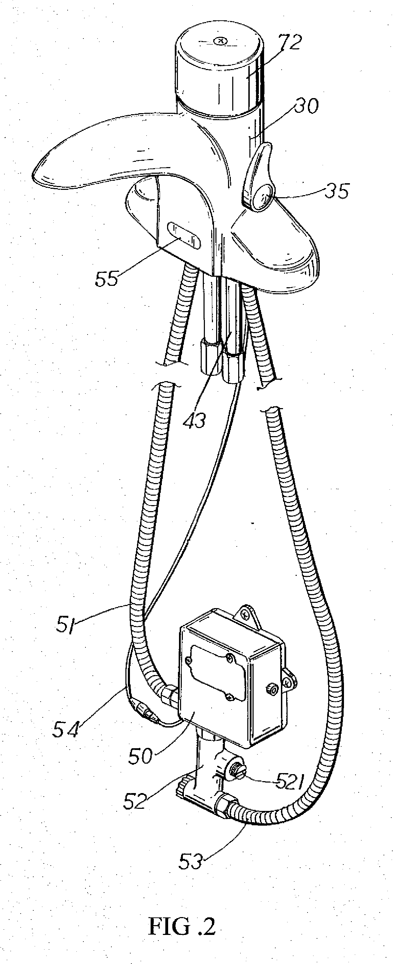

Referring to FIGS. 1 and 2, the invention includes a faucet 30, a water intake mixing dock 40, a solenoid valve 50, a valve sleeve 60 and a switching means 70.

The faucet 30 has a step chamber 31 inside to communicate with a water passage and house the water intake mixing dock 40. It has a sensor port 32 on a front wall and a coupling hole 34 on a side wall to hold a cold/hot regulation bolt 35. The cold/hot regulation bolt 35 has a longitudinal trough 351 on a middle portion and two radial through holes 352 running two sides at different angles.

The water intake mixing dock 40 has a lower bulging step 41 on a lower portion which has two water intake ports 42 to couple with cold and hot water tubes 43. The lower bulging step 41 has an automatic water outlet 45 and an automatic water inlet 46 on a front side and a rear side. There are two anchor troughs 44 on two sides of the automatic water outlet 45, a regulation bore 47 on a middle portion running through the two water intake ports 42. The water intake mixing dock 40 further has a set screw hole 48 in the center of the bottom thereof to be run through by the regulation bore 47 and fastened by a set screw 48'.

The solenoid valve 50 has an automatic water discharge tube 51 connecting to the automatic water outlet 45 and couples with an automatic water intake tube 53 through a check valve 52 which has a check bolt 521 to connect to the automatic water inlet 46. It also has a control line 54 linking to a sensor 55.

The valve sleeve 60 has a upward opening and an automatic water intake port 61 and a manual water intake port 62 on the bottom corresponding to the water intake port 42 of the water intake mixing dock 40. The valve sleeve further has an indented T-shaped mixing chamber 63 around the manual water intake port 62 to cover the two water intake ports 42 and automatic water inlet 46 of the water intake mixing dock 40. The bottom periphery of the valve sleeve around the automatic water intake port 61 and mixing chamber 63 has an annular wedging groove 64 to couple with a sealing ring 65 to separate and stop water. The valve sleeve has two anchor struts 66 extended from the bottom on two sides of the automatic water intake port 61, an annular trough 67 and two water outlets 68 on the peripheral wall, and two anchor troughs 69 on the bottom.

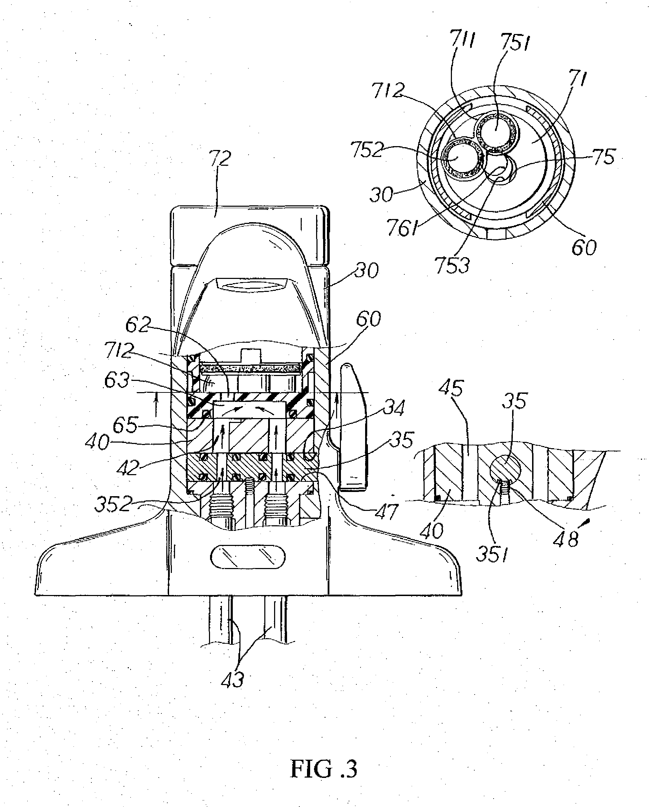

The switching means 70 includes a switch valve 71 housed in the valve sleeve 60, and has an automatic water intake dock 711 and an manual water intake dock 712 on the bottom opposing respectively the automatic water intake port 61 and manual water intake port 62 of the valve sleeve 60. It has two anchor struts 713 on the bottom to couple with the two anchor troughs 69 of the valve sleeve 60 for anchoring. The valve sleeve 60 is held in the faucet 30 with the two anchor struts 66 wedging in the two anchor troughs 44 of the water intake mixing dock 40 so that the mixing chamber 63 of the valve sleeve 60 are opposing the two water intake ports 42 and automatic water inlet 46 of the water intake mixing dock 40, and the automatic water intake port 61 is opposing the automatic water outlet 45. The automatic water intake dock 711 and manual water intake dock 712 of the switch valve 71 are opposing two water control ports 751 and 752 of a fixed ceramic plate 75 locater in the switch valve (referring to FIG. 3 cross section on line A-A). There is a movable ceramic plate 76 with a water control slot 761 formed thereon in contact with the fixed ceramic plate 75. The water control slot 761 corresponds to a water outlet 753 or the two water control ports 751 and 752 of the fixed ceramic plate 75. There is a control strut 74 with a lower end fastened to the movable ceramic plate 76 and a upper end fastened to a control knob 72.

Referring to FIG. 3, the water intake mixing dock 40 is housed in the faucet 30 with the water intake ports 42 coupled to the cold and hot water tubes 43 running through transversely the regulation bore 47 and opposing the coupling hole 34 on one side of the faucet 30 so that the cold/hot regulation bolt 35 can run through transversely the regulation bore 47 and two water intake ports 42 to receive the set screw 48' to wedge in the trough 351. And the two radial holes 352 on the cold/hot regulation bolt 35 at different angles are opposing the two water intake ports 42 that are connected to cold and hot water tubes 43. Thereby when cold and hot water flows through the two water intake ports 42, the cold/hot regulation bolt 35 may be turned to adjust mixing of cold and hot water in the mixing chamber 63. When the control knob 72 is turned to drive the movable ceramic plate 76, the water control slot 761 is turned between the automatic water intake dock 711 and the manual water intake dock 712 of the switch valve 71, the manual water intake dock 712 linking to the upper end of the manual water intake port 62 is closed, hence cold and hot water can only enter the mixing chamber 63 to be mixed.

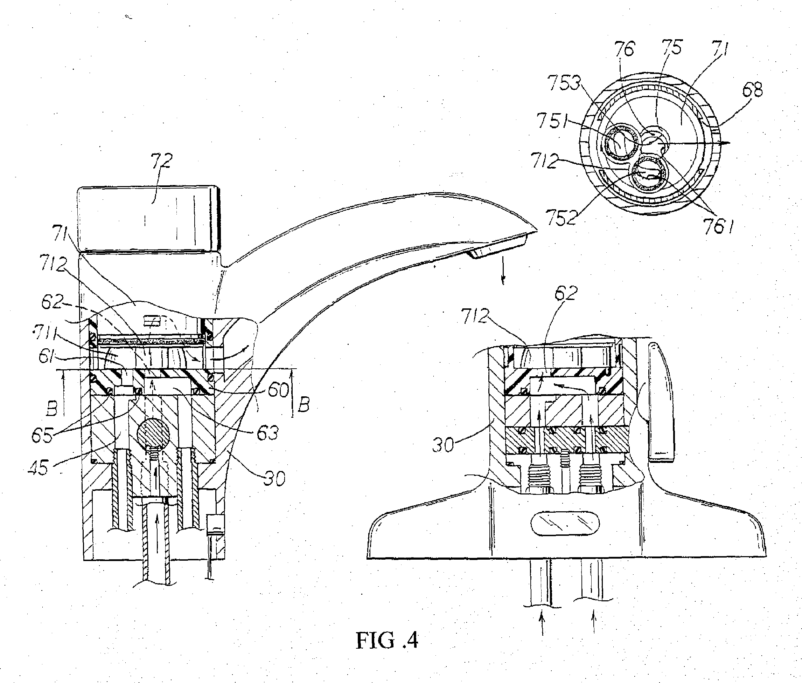

Referring to FIG. 4, to control water discharge manually, the sealing ring 65 wedged between the mixing chamber 63 and automatic water intake port 61 separates and stops water. To select water discharge manually, referring to the cross section on line BB, turn the slot 761 of the movable ceramic plate 76 through the control knob 72 corresponding to the manual water intake dock 712, mixed warm water in the mixing chamber 63 can flow upwards according to the direction indicated by the arrows, through the manual water intake port 62 and manual water intake dock 712 to the switch valve 71, and pass through the water control port 752 of the fixed ceramic plate 75 and water control slot 761 of the movable ceramic plate 76, and water outlet 753 of the fixed ceramic plate 75 and water outlet 68 of the valve sleeve 60 to the spout of the faucet 30 to be discharged.

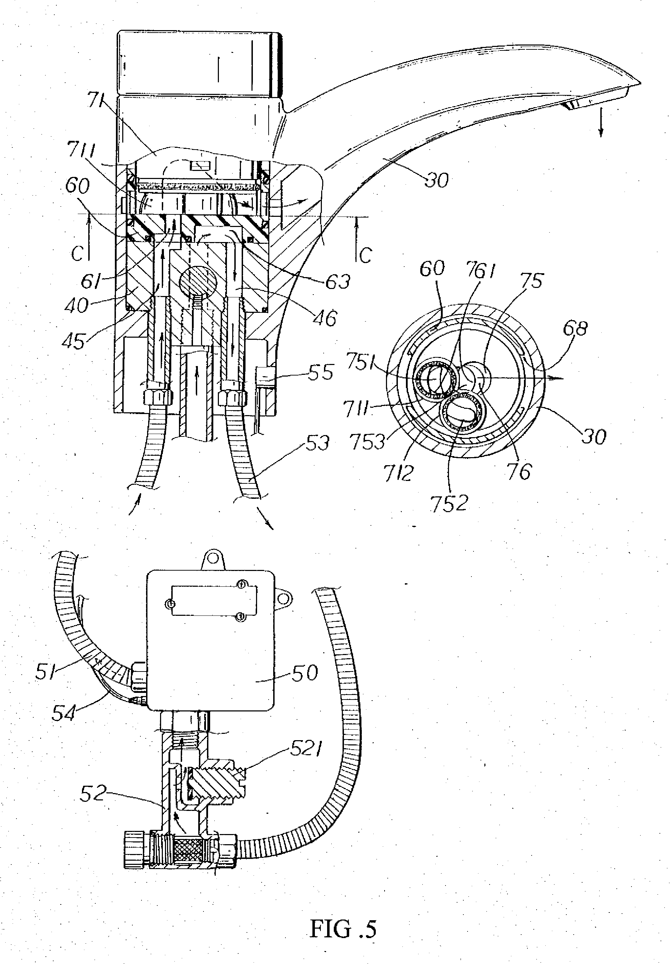

Referring to FIG. 5, to discharge water through automatic induction, referring to the cross section on line CC, turn the water control slot 761 of the movable ceramic plate 76 through the control knob 72 corresponding to the automatic water intake dock 711 of the switch valve 71, the water control port 752 of the fixed ceramic plate 75 corresponding to the manual water intake dock 712 is masked by the movable ceramic plate 76. Meanwhile, the mixed warm water in the mixing chamber 63 automatically flows down through the automatic water outlet 46, automatic water intake tube 53 and check valve 52 opened by the check bolt 521 into the solenoid valve 50. The sensor 55 connected to the control line 54 detects and actuates the solenoid valve 50 to control water to flow upwards through the automatic water discharge tube 51 towards the automatic water outlet 45 of the water intake mixing dock 40, pass through the automatic water intake port 61 of the valve sleeve 60 and automatic water intake dock 711 to the switch valve 71 as shown in the cross section on line CC; then pass through the water control port 751 of the fixed ceramic plate 75 and water control slot 761 of the movable ceramic plate 76, and through the water outlet 753 of the fixed ceramic plate and water outlet 68 of the valve sleeve 60 to the spout of the faucet 30 to be discharged.

Referring to FIG. 5, in the event that the solenoid valve 50 linked to the sensor 55 malfunctions and removal is needed for repairs, fasten the check bolt 521 of the check valve 52 in a closed condition to stop water from flowing towards the solenoid valve 50. Then it can be removed and repaired without affecting normal use.

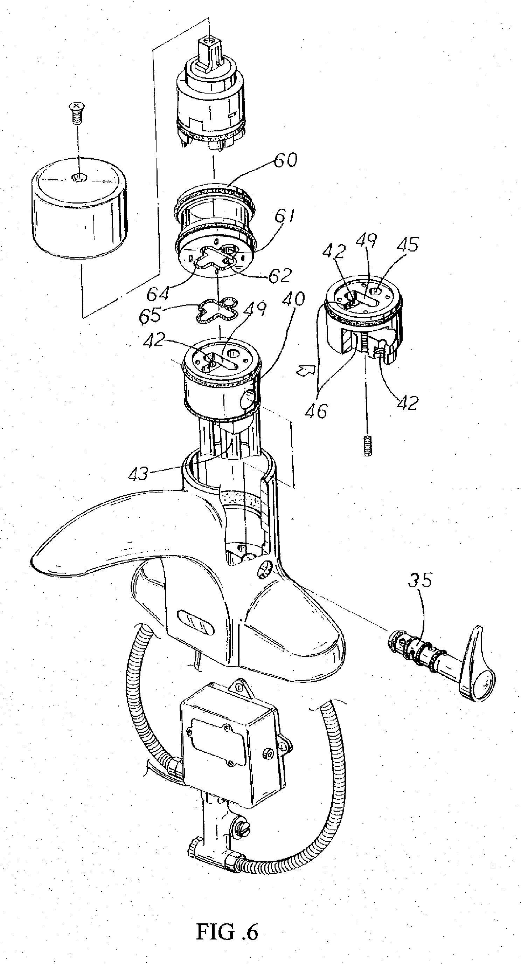

Refer to FIG. 6 for a second embodiment of the invention. In this embodiment, the mixing chamber is located on a upper end of the water intake mixing dock 40. Namely a T-shaped mixing chamber 49 is formed on an upper end of the two water intake ports 42 of the water intake mixing dock 40 to communicate with the automatic water inlet 46. The valve sleeve 60 has an annular wedging groove 64 on the bottom around the manual water intake port 62 to be wedged by a sealing ring 65 to separate the automatic water outlet 45 of the water intake mixing dock 40 opposing the automatic water intake port 61. Thereby when the two water intake ports 42 of the water intake mixing dock 40 connecting to the cold and hot water tubes receive cold and hot water, the cold/hot regulation bolt 35 may be turned to adjust mixing of cold and hot water entered the mixing chamber 49.

In short, the manual water discharge structure of the invention has a solenoid valve and a switch means in the faucet to couple with a water intake mixing dock that connects to cold and hot water tubes and a transverse cold/hot regulation bolt to adjust mixing ratio. Thus users can switch water discharge and mix cold and hot water as desired. Switching operation is more flexible. In the event of malfunctions occurred to the sensor, it can be removed easily for repairs or replacement without affecting normal water supply of the faucet. It offers a significant improvement over the conventional induction faucet.

## Claims

1. A manual water discharge structure for induction faucets capable of mixing cold and hot water, comprising a faucet (30), a water intake mixing dock (40), a solenoid valve (50), a valve sleeve (60) and a switching means (70); wherein:
the faucet (30) has a step chamber (31) to communicate with a water passage and house the water intake mixing dock (40) and a sensor port (32) on a front wall and is run through by a cold/hot regulation bolt (35) on a side wall that has radial through holes (352) at different angles;
the water intake mixing dock (40) has a lower bulging step (41) extended from a lower portion that has two water intake ports (42) formed thereon to couple with cold and hot water tubes (43), the lower bulging step (41) having an automatic water outlet (45) and an automatic water inlet (46) running through a front side and a rear side thereof, and a regulation bore (47) on a middle portion running through the two water intake ports (42) to receive the cold/hot regulation bolt (35) so that the two radial through holes (352) oppose the two water intake ports (42);
the solenoid valve (50) has an automatic water discharge tube (51) connecting to the automatic water outlet (45) and couples with an automatic water intake tube (53) through a check valve (52) which has a check bolt (521) to connect to the automatic water inlet (46), and a control line (54) linking to a sensor (55);
the switching means (70) is coupled with the faucet (30) and includes a switch valve (71) and a control knob (72), the switch valve (71) having an manual water intake dock (712) and an automatic water intake dock (711);
the valve sleeve (60) has a upward opening, an automatic water intake port (61) and a manual water intake port (62) on the bottom opposing the manual water intake dock (712) and the automatic water intake dock (711), an annular trough (67) and two water outlets (68) on the peripheral wall, and an indented T--shaped mixing chamber (63) around the manual water intake port (62) to cover the two water intake ports (42) and the automatic water inlet (46), the mixing chamber (63) having an annular wedging groove (64) on the periphery around the automatic water intake port (61) to couple with a sealing ring (65) to separate and stop water,
wherein manual water discharge or automatic water discharge is selected through the switching means, regulating of water temperature by adjusting mixing ratio of cold and hot water is accomplished through the cold/hot regulation bolt (35), switching to the manual water discharge is allowable, and the solenoid valve (50) is removable for repairs and replacement.

2. The manual water discharge structure for induction faucets of claim 1, wherein the mixing chamber (63) is located on a upper end of the water intake mixing dock (40) to become a T-shaped mixing chamber (49) on a upper end of the two water intake ports (42) communicating with the automatic water inlet (46), the valve sleeve (60) having an annular wedging groove (64) on the bottom around the manual water intake port (62) to be wedged by a sealing ring (65) to press the periphery of the mixing chamber (49) of the water intake mixing dock (40) to separate and stop water from the automatic water outlet (45) of the water intake mixing dock (40) opposing the automatic water intake port (61), thereby the water intake mixing dock (40) connected to the two water intake ports (42) channels the cold and hot water into the mixing chamber (49).

3. The manual water discharge structure for induction faucets of claim 1 or 2, wherein the manual water intake dock (712) and the automatic water intake dock (711) of the switch valve (71) are opposing downward the automatic water inlet (46) and the automatic water outlet (45) of the water intake mixing dock (40) through the manual water intake port (62) and the automatic water intake port (61) of the valve sleeve (60), and opposing inward two water control ports (751, 752) of a fixed ceramic plate (75); the switch valve (71) further having a movable ceramic plate (76) which has a water control slot (761) opposing a water outlet (753) or the two water control ports (751, 752) of the fixed ceramic plate (75), and a control strut (74) which has a lower end fastened to the movable ceramic plate (76) and a upper end fastened to the control knob (72).
